# EUROPEAN PATENT APPLICATION

(11) **EP 4 579 858 A1**
(43) Date of publication of application: **02.07.2025**
(21) Application number: 23891989.8
(22) Date of filing: 14.11.2023
(51) Int. Cl.: H01M 10/058, H01M 4/139, H01M 4/62, H01M 50/451, H01M 50/431, H01M 50/46, H01M 50/403, H01M 4/04, H01M 4/587, H01M 4/38

(54) **METHOD FOR MANUFACTURING SECONDARY BATTERY**

(30) Priority: 14.11.2022 KR 20220151646
(71) Applicant: LG Energy Solution, Ltd., Seoul 07335 (KR)
(72) Inventor: SHIN, Dong-Hyeok, Daejeon 34122 (KR); LEE, Han-Sun, Daejeon 34122 (KR); BANG, Sung-Rok, Daejeon 34122 (KR)
(74) Representative: Hoffmann Eitle
(86) International application number: PCT/KR2023/018307
(87) International publication number: WO 2024/106922

(57) **Abstract**

The present disclosure relates to a method for manufacturing a secondary battery, and an electrode active material layer may be activated by spraying an aqueous solvent onto a surface of the electrode active material layer before laminating an electrode and a separator. Accordingly, it may be possible to improve the adhesion strength between the electrode and the separator and improve the capacity retention and rate characteristics, leading to longer life of the battery.

## Description

### TECHNICAL FIELD

The present disclosure relates to a method for manufacturing a secondary battery.

The present application claims priority to Korean Patent Application No. 10-2022-0151646 filed on November 14, 2022 in the Republic of Korea, the disclosure of which is incorporated herein by reference.

### BACKGROUND ART

With the technological development of, and increasing demand for, mobile devices, the demand for secondary batteries as an energy source is also rapidly growing, and accordingly many studies are being made on batteries that meet various needs. Among batteries, rechargeable batteries or secondary batteries, especially lithium secondary batteries having high energy density are attracting attention, and recently, there is a need for secondary batteries having not only safety, but also with the development or expansion of the range of applications, higher capacity, lower resistance, improved performance such as improved mechanical properties or productivity.

Lithium secondary batteries have a structure in which an electrode assembly includes a positive electrode and a negative electrode, each including an active material coated on an electrode current collector and a porous separator between the positive electrode and the negative electrode and an electrolyte including a lithium salt is filled in the electrode assembly. In lithium secondary batteries, lithium ions move back and forth between the two electrodes by intercalation from the positive electrode active material into the negative electrode active material during charging and deintercalation during discharging, and through this process, energy transfer takes place, whereby batteries are charged and discharged.

However, repeated volume expansion and contraction occurs due to the reaction between the active materials and the lithium ions during charging and discharging, resulting in low capacity retention, low charge/discharge efficiency and life characteristics degradation. Accordingly, studies have been made to control using binder polymer included in the active material layer, but due to viscosity characteristics, it is difficult to stably apply to the existing slurry systems, and the use of a large amount of binder polymer in the active material layer increases electrode resistance and reduces initial efficiency, resulting in performance decline such as capacity reduction.

### SUMMARY

### Technical Problem

The present disclosure is designed to solve the above-described problem, and therefore the present disclosure is directed to providing a method for manufacturing a secondary battery for improving the mechanical performance and electrochemical performance of an electrode and increasing the life of the battery by inducing covalent bonds between a binder polymer of an electrode active material layer and a separator.

It will be readily understood that these and other objectives and advantages of the present disclosure may be realized by the means or methods set forth in the appended claims and a combination thereof.

### Technical Solution

The inventors discovered that the above-described problem may be solved through a method for manufacturing a secondary battery as described below.

According to a first embodiment, there is provided the method for manufacturing the secondary battery, including (S10) preparing an electrode including an electrode current collector and an electrode active material layer on at least one surface of the electrode current collector, and a separator including a porous substrate and an inorganic coating layer on at least one surface of the substrate; (S20) spraying an aqueous solvent onto a surface of the electrode active material layer; (S30) laminating the electrode and the separator such that the surface of the electrode active material layer of the (S20) and the inorganic coating layer of the separator are stacked in contact with each other to make an electrode assembly including the electrode and the separator; and (S40) drying the electrode assembly of the (S30), wherein the electrode active material layer includes a binder polymer including a carboxyl group, and the separator includes boehmite in the inorganic coating layer.

According to a second embodiment, in the first embodiment, there is provided the method for manufacturing the secondary battery, wherein the (S20) comprises spraying the aqueous solvent of a temperature of 20 to 30°C onto at least part of the surface of the electrode active material layer.

According to a third embodiment, in the first or second embodiment, there is provided the method for manufacturing the secondary battery, wherein the (S20) comprises mist-spraying the aqueous solvent onto at least part of the surface of the electrode active material layer for 1 to 10 seconds.

According to a fourth embodiment, in any one of the first to third embodiments, there is provided the method for manufacturing the secondary battery, wherein the lamination of the (S30) is performed at a temperature of 50°C to 130°C under a pressure of 1 kgf/cm² to 10 kgf/cm².

According to a fifth embodiment, in any one of the first to fourth embodiments, there is provided the method for manufacturing the secondary battery, wherein the drying of the (S40) comprises vacuum drying at a temperature of 90 to 130°C.

According to a sixth embodiment, in any one of the first to fifth embodiments, there is provided the method for manufacturing the secondary battery, wherein a condensation reaction between a hydroxyl group of the boehmite and the carboxyl group of the binder polymer forms a covalent bond.

According to a seventh embodiment, in any one of the first to sixth embodiments, there is provided the method for manufacturing the secondary battery, wherein the binder polymer including the carboxyl group is a water dispersible or water soluble binder polymer.

According to an eighth embodiment, in any one of the first to seventh embodiments, there is provided the method for manufacturing the secondary battery, wherein the binder polymer including the carboxyl group includes carboxymethylcellulose, polyacrylic acid, or a mixture thereof.

According to a ninth embodiment, in any one of the first to eighth embodiments, there is provided the method for manufacturing the secondary battery, wherein the electrode further includes an adhesive binder polymer of styrene-butadiene rubber, acrylated styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylenepropylene copolymer, polyethyleneoxide, polyvinylpyrrolidone, polyepichlorohydrin, polyphosphazene, polyacrylonitrile, polystyrene, an ethylenepropylenediene copolymer, polyvinylpyridine, chlorosulfonated polyethylene, latex, polyester resin, acrylic resin, phenol resin, epoxy resin, polyvinylalcohol, hydroxypropylmethylcellulose, hydroxypropylcellulose and diacetylcellulose, or a mixture thereof.

According to a tenth embodiment, in any one of the first to ninth embodiments, there is provided the method for manufacturing the secondary battery, wherein the electrode is a negative electrode, and includes a carbon-based active material and a silicon-based active material as a negative electrode active material.

According to an eleventh embodiment, in any one of the first to tenth embodiments, there is provided the method for manufacturing the secondary battery, wherein the aqueous solvent includes water, methanol, ethanol, propylalcohol, butylalcohol, butandiol, ethyleneglycol, propyleneglycol, diethyleneglycol, tripropyleneglycol, or a mixture thereof.

According to a twelfth embodiment, there is provided a secondary battery manufactured by the manufacturing method according to any one of the first to eleventh embodiments.

### Advantageous Effects

The method for manufacturing the secondary battery according to the present disclosure may improve the mechanical performance and electrochemical performance of the electrode by a simpler method. Specifically, the method includes activating the electrode active material layer by spraying the aqueous solvent onto the electrode active material layer before laminating the electrode and the separator, thereby improving the adhesion strength between the electrode and the separator, and improving capacity retention and rate characteristics, resulting in longer life of the battery.

### BRIEF DESCRIPTION OF THE DRAWINGS

The accompanying drawings illustrate exemplary embodiments of the present disclosure and together with the foregoing detailed description, serve to provide a further understanding of the technical aspect of the present disclosure, and the scope of the present disclosure is not limited thereto. In the drawings, for clarity of description, the shape, size, scale or proportion of the elements may be exaggerated for emphasis.

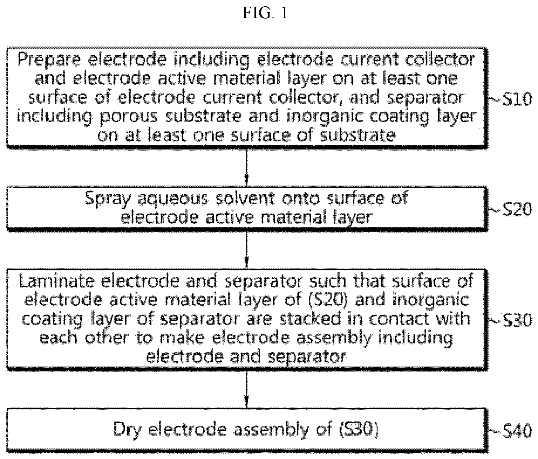

FIG. 1 is a flowchart of a method for manufacturing a secondary battery according to an embodiment of the present disclosure.
FIG. 2 schematically shows a process of manufacturing a secondary battery according to an embodiment of the present disclosure.

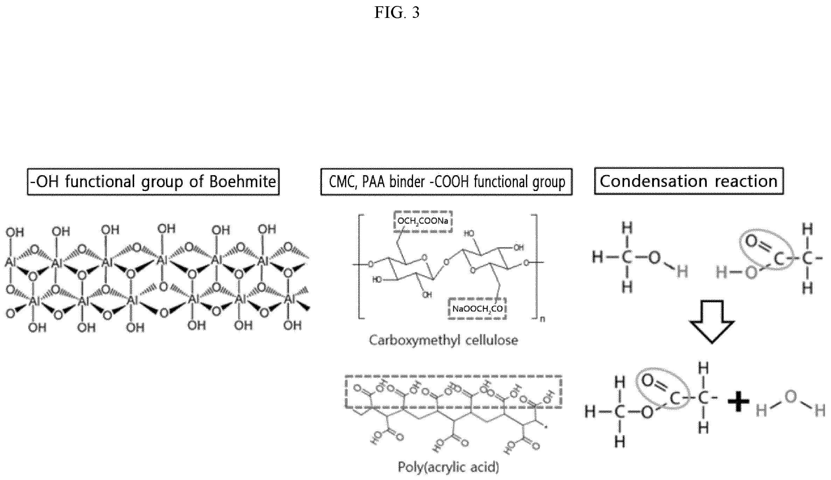

FIG. 3 shows a chemical structure of boehmite and a binder polymer and its condensation reaction.

### DETAILED DESCRIPTION

Hereinafter, the present disclosure will be described in detail. It should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations shown in the drawings are provided to describe the exemplary embodiments of the present disclosure, but not intended to fully describe the technical aspect of the present disclosure, so it should be understood that a variety of other equivalents and modifications could have been made thereto at the time the application was filed.

The term "comprise", "include" or "have" when used in the present disclosure, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

In the present disclosure, A and/or B refers to either A or B or both.

The present disclosure relates to a method for manufacturing a secondary battery.

In the present disclosure, the secondary battery is a device that converts chemical energy to electrical energy by electrochemical reaction, and is preferably a lithium secondary battery including a lithium metal secondary battery, a lithium ion secondary battery, a lithium polymer secondary battery or a lithium ion polymer secondary battery.

The secondary battery includes an electrode assembly including an electrode and a separator stacked, and specifically, at least one negative electrode and at least one positive electrode stacked in an alternating manner with the separator interposed between.

The electrode includes an electrode current collector and an electrode active material layer on at least one surface of the electrode current collector, and the separator includes a porous substrate and an inorganic coating layer on at least one surface of the substrate.

The electrode active material layer includes a binder polymer including a carboxyl group as a binder resin, and the inorganic coating layer includes boehmite.

The inorganic coating layer of the separator and the electrode active material layer are stacked in contact with each other, and a hydroxyl group (-OH) of the boehmite reacts with the carboxyl group (-COOH) of the binder polymer to form covalent bonds (a result of condensation reaction).

The main cause of performance decline and degradation of the electrode is generally periodic volume expansion and contraction of the electrode active material, specifically the negative electrode active material during charging and discharging. When it fails to control the volume change of the electrode active material, it results in fewer contact points between the electrode active material, and a decrease in electrical properties and cracking, resulting in shorter life.

The method for manufacturing the secondary battery according to the present disclosure includes a predetermined step of spraying an aqueous solvent onto the surface of the electrode active material layer to induce a predetermined chemical bond between the inorganic coating layer of the separator and the electrode active material layer, in order to reduce the volume change of the electrode active material, thereby improving the mechanical performance of the electrode and increasing the life of the battery.

**In** an embodiment of the present disclosure, the method for manufacturing the secondary battery includes:
(S10) preparing the electrode including the electrode current collector and the electrode active material layer on at least one surface of the electrode current collector, and the separator including the porous substrate and the inorganic coating layer on at least one surface of the substrate;
(S20) spraying the aqueous solvent onto the surface of the electrode active material layer;
(S30) laminating the electrode and the separator such that the surface of the electrode active material layer of the (S20) and the inorganic coating layer of the separator are stacked in contact with each other to make the electrode assembly including the electrode and the separator; and
(S40) drying the electrode assembly of the step (S30).

Hereinafter, each step will be described in detail.

The method starts with preparing the electrode including the electrode current collector and the electrode active material layer on at least one surface of the electrode current collector, and the separator comprising the porous substrate and the inorganic coating layer on at least one surface of the substrate (S10).

**In** this instance, the electrode active material layer includes the binder polymer including the carboxyl group, and the separator includes boehmite in the inorganic coating layer.

**In** the present disclosure, the electrode is positive and/or negative, the electrode includes the electrode current collector and the electrode active material layer on at least one surface of the electrode current collector, and the electrode active material layer includes the electrode active material and the binder polymer. The electrode may be manufactured by coating a slurry including the electrode active material and the binder polymer on the electrode current collector by the well-known method.

The electrode current collector is not limited to a particular type and may include any electrode current collector that has high conductivity without causing any chemical change to the corresponding secondary battery. The electrode current collector may include, for example, stainless steel, copper, aluminum, nickel, titanium, sintered carbon, or aluminum or stainless steel treated with carbon, nickel, titanium or silver on the surface.

In the case of the negative electrode, the electrode active material layer may include a negative electrode active material, and in the case of the positive electrode, may include a positive electrode active material.

For example, the negative electrode active material may include compounds capable of reversible intercalation or deintercalation of lithium. Specific examples of the negative electrode active material may include any one of carbon-based active materials such as artificial graphite, natural graphite, graphitizable carbon fibers, amorphous carbon, etc.; silicon-based active materials such as SiOx (0 < x ≤ 2), and metal-based compounds that can form alloys with lithium such as Si, Al, Sn, Pb, Zn, Bi, In, Mg, Ga, Cd, Si alloys, Sn alloys or Al alloys; metal oxide capable of doping and dedoping lithium such as SnO₂, vanadium oxide, lithium vanadium oxide, etc.; or composites of the metal-based compounds and the carbon-based active materials such as Si-C composites or Sn-C composites, or a mixture thereof. Additionally, a metal lithium thin film may be used as the negative electrode active material. Additionally, the carbon-based active material may include low crystallinity carbon and high crystallinity carbon. The low crystallinity carbon typically includes soft carbon and hard carbon, and the high crystallinity carbon typically includes high temperature sintered carbon such as amorphous, platy, flaky, spherical or fibrous natural graphite or artificial graphite, Kish graphite, pyrolytic carbon, mesophase pitch based carbon fibers, meso-carbon microbeads, mesophase pitches and petroleum or coal tar pitch derived cokes.

For example, the positive electrode active material may include layered compounds such as lithium cobalt oxide (LiCoO₂), lithium nickel oxide (LiNiO₂) or compounds with substitution by one or more transition metals; lithium manganese oxide of formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; lithium nickel oxide represented by formula LiNi₁₋ₓMₓO₂ (where M = at least one selected from the group consisting of Co, Mn, Al, Cu, Fe, Mg, B and Ga, x= 0.01 to 0.9); lithium manganese composite oxide represented by formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); LiMn₂O₄ with partial substitution of Li in the formula by alkali earth metal ions; disulfide compounds; and Fe₂(MoO₄)₃, but is not limited thereto.

The binder polymer includes the binder polymer including the carboxyl group.

The binder polymer including the carboxyl group may form covalent bonds by condensation reaction with boehmite included in the separator as described below. Additionally, the binder polymer including the carboxyl group may be activated by hydrogen bonds between the aqueous solvent and at least some carboxyl groups of the binder polymer located on the surface of the active material layer by spraying the aqueous solvent onto the surface of the electrode active material layer as described below, and the carboxyl group of the activated binder polymer may form covalent bonds with boehmite in the subsequent process, helping to improve the mechanical properties and life characteristics of the electrode.

The binder polymer including the carboxyl group may be water dispersible or water soluble. In the present disclosure, the water dispersible binder polymer is a polymer that does not dissolve in the aqueous solvent but is dispersed in at least part when it is added to the aqueous solvent, and the water soluble binder polymer is a polymer of which at least part dissolves when it is added to the aqueous solvent.

The water dispersible binder polymer may be, for example, polyacrylic acid, and the water soluble binder polymer may be carboxymethyl cellulose. The binder water dispersible polymer and the water soluble binder polymer may be used in combination.

Additionally, in addition to the binder polymer including the carboxyl group, the electrode active material layer may further include an adhesive binder polymer. The adhesive binder polymer is not limited to a particular type and may include any material that adhere the electrode active material layer to the separator, and is preferably an aqueous binder polymer.

For example, the adhesive binder polymer may include at least one of styrene-butadiene rubber, acrylated styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylenepropylene copolymer, polyethyleneoxide, polyvinylpyrrolidone, polyepichlorohydrin, polyphosphazene, polyacrylonitrile, polystyrene, an ethylenepropylenediene copolymer, polyvinylpyridine, chlorosulfonated polyethylene, latex, polyester resin, acrylic resin, phenol resin, epoxy resin, polyvinylalcohol, hydroxypropylmethylcellulose, hydroxypropylcellulose or diacetylcellulose.

Additionally, in addition to the electrode active material and the binder polymer, the electrode active material layer may further include materials used to form the electrode active material layer. For example, the electrode active material layer may further include additives commonly used in the technical field pertaining to the present disclosure, for example, a solvent, a conductive material, a thickening agent, etc.

In the present disclosure, the separator comprises the porous substrate and the inorganic coating layer on at least one surface of the substrate. The separator may be interposed between the negative electrode and the positive electrode to physically and electrically separate the two electrode to prevent an internal circuit, and may play a role in providing movement paths of ions and impregnating the electrolyte.

The porous substrate may include any substrate having a porous structure without limitation. For example, the porous substrate may include a porous polymer film made of polyolefin-containing polymer such as an ethylene homopolymer, a propylene homopolymer, an ethylene/butene copolymer, an ethylene/hexene copolymer and an ethylene/methacrylate copolymer or a stack structure of them in two or more layers. The porous substrate may include a porous non-woven fabric commonly used in the art, for example, a non-woven fabric made of high-melting-point glass fibers, polyethyleneterephthalate fibers, etc.

The inorganic coating layer may be located on at least one surface of the porous substrate, and includes the binder polymer and inorganic particles. The separator having the inorganic coating layer may suppress short circuits due to high electrical insulation properties, and in the event short circuits occur, may inhibit the increase of the shorted area, thereby contributing to the improved safety of the battery.

The inorganic coating layer has porous properties by the pores formed by the interstitial volume between the inorganic particles. The interstitial volume refers to a space defined by the inorganic particles in substantial contact with each other in the packed structure of the inorganic particles.

The inorganic particles play a role in forming interstitial spaces between the inorganic particles to form micropores and act as a sort of spacer to maintain the physical shape, and in general, do not change in physical properties at high temperature of 200°C or above, leading to high heat resistance.

In the present disclosure, the inorganic particles include boehmite. As described above, the boehmite may form covalent bonds by condensation reaction with the binder polymer including the carboxyl group included in the electrode active material layer. In particular, since boehmite has chemical and mechanical properties suitable for use in the battery and includes a large number of hydroxyl groups (-OH), this has a beneficial effect on the condensation reaction with the binder polymer including the carboxyl group.

**In** the present disclosure, in addition to the boehmite, the inorganic coating layer may further include inorganic particles, and the inorganic particles are not limited to a particular type and may include any inorganic particles that are electrochemically stable, for example, any inorganic particles in which oxidation and/or reduction reaction does not occur in the operating voltage range *(e.g.,* 0 to 5V vs Li/Li+) of the battery.

The thickness of the inorganic coating layer may be in a range between 20% and 50% or between 20% and 30% of the thickness of the separator. When the thickness of the inorganic coating layer is within the above-described range, this has a beneficial effect on heat resistance of the separator and condensation reaction with the binder polymer including the carboxyl group of the electrode active material layer, thereby improving the mechanical properties of the electrode and the life of the battery.

**In** the present disclosure, the binder polymer included in the inorganic coating layer of the separator is not limited to a particular type and may include any binder polymer that provides bonding strength between the inorganic particles and bonding strength between the inorganic coating layer and the electrode.

Subsequently, the aqueous solvent is sprayed onto the surface of the electrode active material layer (S20).

When the aqueous solvent is sprayed onto the surface of the electrode active material layer, the carboxyl group included in the binder polymer present on the surface of the electrode active material layer may be activated. Specifically, the carboxyl group included in the binder polymer on the surface of the electrode active material layer forms carboxyl group bonds between the binder polymers or in the binder polymer, but when the aqueous solvent is sprayed, at least some carboxyl groups form hydrogen bonds with the sprayed aqueous solvent and are desorbed from the surface of the electrode active material layer. That is, the carboxyl group desorbed from the surface of the electrode active material layer is activated to induce condensation reaction with the hydroxyl group of the boehmite, and the coupling of the binder polymer of the electrode active material layer and the boehmite may reduce the volume change of the electrode active material that occurs during charging and discharging, thereby maintaining the structure of the electrode for a long term, improving capacity retention and rate characteristics and achieving high adhesion strength, helping to improve the mechanical properties and life characteristics of the electrode.

Meanwhile, in the electrode-separator structure of the present disclosure, when the binder polymer is activated by spraying the aqueous solvent onto one surface of the separator, not the surface of the electrode active material layer, the binder polymer present on the surface of the electrode active material layer is exposed to the aqueous solvent for a short time, resulting in inadequate activation of the binder polymer, making it difficult to expect the effect of the present disclosure.

According to an embodiment of the present disclosure, the (S20) may include spraying the aqueous solvent of about 20 to 30°C, specifically 25°C onto at least part of the surface of the electrode active material layer.

Additionally, according to an embodiment of the present disclosure, the (S20) may include mist spraying the aqueous solvent onto at least part of the surface of the electrode active material layer for about 1 to 10 seconds, specifically about 1 to 3 seconds.

When the aqueous solvent is sprayed onto the surface of the electrode active material layer within the aforementioned temperature range and/or the aforementioned time range, at least some carboxyl groups located on the surface of the electrode active material layer may form hydrogen bonds with the aqueous solvent.

The aqueous solvent is not limited to a particular type and may include any aqueous solvent that activates the binder polymer including the carboxyl group, already coated on the electrode active material layer. For example, the aqueous solvent may include water, methanol, ethanol, propylalcohol, butylalcohol, butanediol, ethyleneglycol, propyleneglycol, diethyleneglycol, tripropyleneglycol, or a mixture thereof. Preferably, the aqueous solvent may be water, and in this instance, the water may be deionized water (D.I water) free of impurities.

Subsequently, the electrode and the separator are laminated such that the surface of the active material layer of the (S20) and the inorganic coating layer of the separator are stacked in contact with each other to make the electrode assembly including the electrode and the separator (S30).

The lamination is performed on a stack structure formed by placing the separator between the electrodes, and the stack structure is laminated to make the electrode assembly. In a specific embodiment of the present disclosure, the electrode assembly may have negative electrode/separator/positive electrode structure placement. The lamination is a process that joins the electrode and the separator together, and when the electrode and the separator are adhered too tightly, wettability of the electrode and the separator may reduce and the air permeability of the separator may reduce, and when the electrode and the separator are adhered too loosely, the resistance of the secondary battery may increase and the efficiency in the process may reduce. Accordingly, it is preferable to maintain the adhesion strength at optimal temperature and pressure, and improve interfacial characteristics between the electrode and the separator. In this regard, the lamination may be performed at the temperature of 50°C to 130°C under the pressure of 1 kgf/cm² to 10 kgf/cm².

Subsequently, the electrode assembly of the (S30) is dried (S40).

In the present disclosure, the drying of the electrode assembly may accelerate the condensation reaction between the carboxyl group included in the binder polymer of the electrode active material layer and the hydroxyl group of the boehmite included in the inorganic coating layer of the separator to form more covalent bonds.

The drying may include vacuum drying in a vacuum atmosphere at 90 to 130°C. When the drying is performed in the aforementioned conditions, water as a result of the condensation reaction between the carboxyl group and the hydroxyl group may be removed, and the condensation reaction may be accelerated to form more covalent bonds. Accordingly, it may be possible to improve the adhesion strength between the electrode and the separator, and improve the capacity retention and rate characteristics, leading to longer life of the battery.

The secondary battery manufactured by the above-described manufacturing method of the present disclosure may have -COO- bonds by the condensation reaction at the interface between the separator and the electrode. Specifically, -COO-bonds at the interface between the separator and the electrode inside the secondary battery may be identified by an analysis or measurement method, for example, X-ray photoelectron spectroscopy (XPS) or Raman spectroscopy.

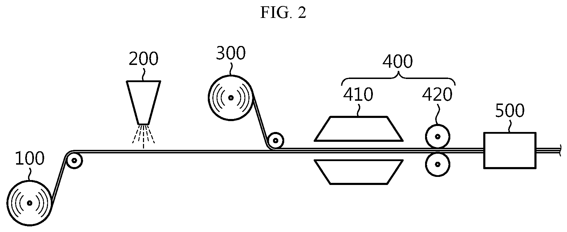

Hereinafter, the present disclosure will be described in detail with reference to FIG. 2 and embodiments. However, the drawings and embodiments according to the present disclosure may be modified in many other forms, and the scope of the present disclosure should not be interpreted as being limited to the drawings and embodiments. The drawings and embodiments of the present disclosure are provided to explain the present disclosure to persons having ordinary skill in the technical field pertaining to the present disclosure fully and thoroughly.

For example, describing the method for manufacturing the secondary battery according to an embodiment of the present disclosure with reference to FIG. 2, the electrode having the electrode active material layer is unwound from an electrode roll 100 and moves on a conveyor at a constant speed. Before the electrode and the separator are stacked, the aqueous solvent is sprayed onto the surface of the electrode active material layer by a sprayer 200. Subsequently, the surface of the electrode active material layer and the separator unwound from a separator roll 300, specifically the inorganic coating layer of the separator are stacked in contact with each other. Subsequently, the electrode assembly is made by lamination through a lamination machine 400, specifically a heater chamber 410 and a roller 420, and then dried through a dryer 500.

An embodiment according to the present disclosure will be described in detail below.

### 1) Preparation of negative electrode

A negative electrode active material, an aqueous binder and SBR were mixed at a weight ratio 97.5: 1: 1.5 to prepare an aqueous binder based negative electrode.

The negative electrode active material includes graphite and a Si-based negative electrode material (pure-Si, SiO, SiOx, SiC), and the aqueous binder includes carboxymethylcellulose (CMC) and polyacrylic acid (PAA).

### 2) Preparation of positive electrode

A positive electrode active material, a PVDF binder and a conductive material were mixed at a weight ratio 97:1.5:1.5 to prepare a positive electrode. The positive electrode active material includes LCO, NCM, and the conductive material includes Ketjen black, Super P.

### 3) Preparation of separator

A slurry prepared by adding PVDF as a binder polymer and boehmite (particle size: 0.2 um) as inorganic particles to NMP (N-Methyl-2-pyrrolidone) as a solvent at a weight ratio of 5:95 was coated on a polyethylene porous substrate (thickness about 9 um, porosity about 40% to 45%), and dried to prepare a separator having an inorganic coating layer.

### 4) Preparation of secondary battery

D.I water free of impurities was sprayed onto the surface of the negative electrode active material layer of the negative electrode prepared in 1) to activate the binder polymer on the surface of the negative electrode active material layer.

Subsequently, the separator of 3) was placed between the negative electrode and the positive electrode to make an electrode assembly, followed by lamination at the temperature of 50°C to 130°C under the pressure of 1 kgf/cm² to 10 kgf/cm², and vacuum drying at the temperature of 90 to 130°C to prepare a secondary battery.

## Claims

1. A method for manufacturing a secondary battery, comprising:
(S10) preparing an electrode including an electrode current collector and an electrode active material layer on at least one surface of the electrode current collector, and a separator including a porous substrate and an inorganic coating layer on at least one surface of the substrate;
(S20) spraying an aqueous solvent onto a surface of the electrode active material layer;
(S30) laminating the electrode and the separator such that the surface of the electrode active material layer of the (S20) and the inorganic coating layer of the separator are stacked in contact with each other to make an electrode assembly including the electrode and the separator; and
(S40) drying the electrode assembly of the (S30),
wherein the electrode active material layer includes a binder polymer including a carboxyl group, and
wherein the separator includes boehmite in the inorganic coating layer.

2. The method for manufacturing the secondary battery according to claim 1, wherein the (S20) comprises spraying the aqueous solvent of a temperature of 20 to 30°C onto at least part of the surface of the electrode active material layer.

3. The method for manufacturing the secondary battery according to claim 1, wherein the (S20) comprises mist-spraying the aqueous solvent onto at least part of the surface of the electrode active material layer for 1 to 10 seconds.

4. The method for manufacturing the secondary battery according to claim **1,** wherein the lamination of the (S30) is performed at a temperature of 50°C to 130°C under a pressure of 1 kgf/cm² to 10 kgf/cm².

5. The method for manufacturing the secondary battery according to claim **1,** wherein the drying of the (S40) comprises vacuum drying at a temperature of 90 to 130°C.

6. The method for manufacturing the secondary battery according to claim **1,** wherein a condensation reaction between a hydroxyl group of the boehmite and the carboxyl group of the binder polymer forms a covalent bond.

7. The method for manufacturing the secondary battery according to claim **1,** wherein the binder polymer including the carboxyl group is a water dispersible or water soluble binder polymer.

8. The method for manufacturing the secondary battery according to claim **1,** wherein the binder polymer including the carboxyl group includes carboxymethylcellulose, polyacrylic acid, or a mixture thereof.

9. The method for manufacturing the secondary battery according to claim **1,** wherein the electrode further includes an adhesive binder polymer of styrene-butadiene rubber, acrylated styrene-butadiene rubber, acrylonitrile-butadiene rubber, acrylonitrile-butadiene-styrene rubber, acrylic rubber, butyl rubber, fluoro rubber, polytetrafluoroethylene, polyethylene, polypropylene, an ethylenepropylene copolymer, polyethyleneoxide, polyvinylpyrrolidone, polyepichlorohydrin, polyphosphazene, polyacrylonitrile, polystyrene, an ethylenepropylenediene copolymer, polyvinylpyridine, chlorosulfonated polyethylene, latex, polyester resin, acrylic resin, phenol resin, epoxy resin, polyvinylalcohol, hydroxypropylmethylcellulose, hydroxypropylcellulose and diacetylcellulose, or a mixture thereof.

10. The method for manufacturing the secondary battery according to claim **1,** wherein the electrode is a negative electrode, and includes a carbon-based active material and a silicon-based active material as a negative electrode active material.

11. The method for manufacturing the secondary battery according to claim **1,** wherein the aqueous solvent includes water, methanol, ethanol, propylalcohol, butylalcohol, butandiol, ethyleneglycol, propyleneglycol, diethyleneglycol, tripropyleneglycol, or a mixture thereof.

12. A secondary battery manufactured by the manufacturing method according to any one of claims 1 to 11.
